# FASCICULE DE BREVET EUROPEEN

(11) **EP 4 013 610 B1**
(45) Date de publication et mention de la délivrance du brevet: **19.04.2023**
(21) Numéro de dépôt: 20757646.3
(22) Date de dépôt: 30.07.2020
(51) Int. Cl.: B32B 18/00, C04B 35/80, F16D 65/00, F16D 69/02

(54) **PREFORME FIBREUSE D'UNE PIECE DE FRICTION**
FASERVORFORM EINES REIBUNGSTEILS
FIBROUS PREFORM OF A FRICTION PART

(30) Priorité: 12.08.2019 FR 1909163
(43) Date de publication de la demande: 22.06.2022
(73) Titulaire: Safran Landing Systems, 78140 Vélizy-Villacoublay (FR)
(72) Inventeur: GAUTIER, Patrice, 77550 MOISSY-CRAMAYEL (FR)
(74) Mandataire: Cabinet Beau de Loménie
(86) Numéro de dépôt international: PCT/FR2020/051407
(87) Numéro de publication internationale: WO 2021/028629

(56) Documents cités:
- WO-A1-97/20092
- FR-A1- 2 880 016
- US-A1- 2004 192 534

## Description

### Domaine Technique

L'invention concerne une préforme fibreuse qui est destinée à former le renfort fibreux d'une pièce de friction et qui comprend une texture fibreuse hélicoïdale tissée et aiguilletée présentant des particules céramiques sélectivement au niveau des zones destinées à définir les faces frottantes de la pièce de friction. L'invention concerne également le procédé de fabrication d'une telle préforme fibreuse.

### Technique antérieure

Il est souhaitable de disposer de pièces pour des applications de friction qui présentent de bonnes propriétés de freinage à chaud comme à froid. Afin d'améliorer les performances à froid, des particules céramiques peuvent être introduites dans la préforme fibreuse après sa fabrication mais dans ce cas il est recherché de ne pas trop dégrader les performances de freinage à chaud. L'invention vise à améliorer le compromis obtenu entre performances de freinage à chaud et à froid des pièces de friction. FR2880016 divulgue un procédé pour la réalisation de préforme fibreuse à partir d'au moins une texture fibreuse bidimensionnelle en fibres de carbone ou de précurseur de carbone, pour la réalisation d'une préforme fibreuse d'un disque de frein type carbone/carbone.

### Exposé de l'invention

L'invention concerne une préforme fibreuse destinée à former le renfort fibreux d'une pièce de friction en matériau composite, comprenant une texture fibreuse hélicoïdale tissée définissant une superposition de couches fibreuses, ladite texture étant aiguilletée et définissant :
- une première portion et une deuxième portion chacune destinée à définir une face frottante distincte de la pièce de friction et comprenant chacune au moins une couche fibreuse comprenant des particules céramiques, et
- une portion intermédiaire présente entre la première portion et la deuxième portion et comprenant au moins une couche fibreuse, ladite portion intermédiaire étant dépourvue de particules céramiques.

Dans l'invention, les particules céramiques sont sélectivement présentes au niveau des première et deuxième portions qui correspondent aux zones destinées à former les faces frottantes de la pièce de friction. Les particules céramiques ne sont pas présentes dans la portion intermédiaire. La présence des particules céramiques près des faces frottantes permet d'améliorer les performances de freinage à froid de la pièce de friction. L'omission des particules céramiques dans la portion intermédiaire contribue à renforcer le matériau et à améliorer les propriétés de freinage à chaud de la pièce de friction par rapport au cas où les particules céramiques sont présentes de manière homogène dans toute la préforme fibreuse. La préforme fibreuse décrite plus haut permet ainsi d'obtenir une pièce de friction présentant un meilleur compromis entre les propriétés de freinage à froid et les propriétés de freinage à chaud. L'omission des particules céramiques dans la partie intermédiaire présente en outre l'avantage de faciliter l'usinage pour le perçage de trous de refroidissement dans la pièce de friction.

Dans un exemple de réalisation, les particules céramiques sont présentes de manière discontinue sur la surface des couches fibreuses des première et deuxième portions. Il y a dans ce cas alternance entre des zones comprenant les particules céramiques et des zones dépourvues de particules céramiques au niveau des faces frottantes. Cela permet d'améliorer davantage encore le compromis entre les propriétés de freinage à froid et les propriétés de freinage à chaud de la pièce de friction.

Dans un exemple de réalisation, les première et deuxième portions comprennent chacune une première couche fibreuse ayant des premières zones dans lesquelles les particules céramiques sont présentes, et une deuxième couche fibreuse, superposée à la première couche fibreuse, ayant des deuxièmes zones dans lesquelles les particules céramiques sont présentes, les deuxièmes zones ne recouvrant pas les premières zones.

Dans ce cas, il y a décalage entre les positions des particules céramiques présentes dans différentes couches superposées des première et deuxième portions. Cela permet d'éviter toute risque d'ondulation de la préforme fibreuse.

Dans un exemple de réalisation, les particules céramiques sont présentes dans des zones s'étendant le long d'une direction radiale des couches fibreuses des première et deuxième portions.

L'invention vise également une pièce de friction en matériau composite comprenant une préforme fibreuse telle que décrite plus haut, et une matrice présente dans la porosité de la préforme fibreuse.

Dans un exemple de réalisation, la pièce de friction est un disque de frein.

La pièce de friction peut être en matériau composite carbone/carbone avec la préforme fibreuse formée de fils de carbone, et une matrice de carbone densifiant la porosité de la préforme.

L'invention vise également un procédé de fabrication d'une préforme fibreuse telle que décrite plus haut, comprenant au moins :
- l'aiguilletage d'une première partie d'une nappe fibreuse hélicoïdale tissée destinée à former la première portion de la texture fibreuse, des particules céramiques étant distribuées sur ladite première partie durant cet aiguilletage,
- l'aiguilletage d'une partie intermédiaire de la nappe fibreuse hélicoïdale tissée destinée à former la portion intermédiaire de la texture fibreuse, ladite partie intermédiaire étant superposée à la première partie et la distribution des particules céramiques étant interrompue durant cet aiguilletage, et
- l'aiguilletage d'une deuxième partie de la nappe fibreuse hélicoïdale tissée destinée à former la deuxième portion de la texture fibreuse, ladite deuxième partie étant superposée à la partie intermédiaire et des particules céramiques étant distribuées sur ladite deuxième partie durant cet aiguilletage.

Les particules céramiques sont introduites durant l'aiguilletage de la préforme fibreuse en réalisant un dépôt des particules céramiques au niveau de la ou des couches destinée(s) à former les première et deuxième portions et en interrompant ce dépôt de particules céramiques lors de l'aiguilletage de la ou des couche(s) destinée(s) à former la portion intermédiaire.

Dans un exemple de réalisation, les particules céramiques sont distribuées de manière discontinue sur la surface des couches fibreuses des première et deuxième parties de la nappe fibreuse hélicoïdale tissée.

Cette caractéristique permet d'obtenir une présence discontinue des particules céramiques sur la surface des couches fibreuses des première et deuxième portions comme décrit plus haut.

Dans un exemple de réalisation, on réalise durant l'aiguilletage de chacune des première et deuxième parties de la nappe fibreuse hélicoïdale tissée :
- l'aiguilletage d'une première couche fibreuse durant lequel on dépose les particules céramiques de manière discontinue dans des premières zones sur la surface de la première couche fibreuse, et
- l'aiguilletage d'une deuxième couche fibreuse, superposée à la première couche fibreuse, durant lequel on dépose les particules céramiques de manière discontinue dans des deuxièmes zones sur la surface de la deuxième couche fibreuse, les deuxièmes zones ne recouvrant pas les premières zones.

Cette caractéristique permet d'obtenir un décalage entre les positions des particules céramiques présentes dans différentes couches superposées des première et deuxième portions comme décrit plus haut.

Dans un exemple de réalisation, les particules céramiques sont distribuées par un système de distribution en mouvement le long d'une direction radiale des couches fibreuses des première et deuxième parties.

Cette caractéristique permet d'obtenir des particules céramiques présentes dans des zones s'étendant le long d'une direction radiale des couches fibreuses des première et deuxième portions comme décrit plus haut.

### Brève description des dessins

[Fig. 1] La figure 1 illustre, de manière schématique, une section d'un exemple de préforme fibreuse selon l'invention.
[Fig. 2] La figure 2 illustre, de manière schématique, la répartition des particules céramiques au sein de différentes couches superposées proches d'une face frottante dans la préforme fibreuse de la figure 1.
[Fig. 3] La figure 3 illustre une partie d'un exemple de machine d'aiguilletage apte à fabriquer une préforme fibreuse selon l'invention.
[Fig. 4] La figure 4 est un résultat expérimental comparant les performances de freinage d'un exemple de pièce de friction selon l'invention avec celles d'une pièce de friction hors invention.
[Fig. 5] La figure 5 est un résultat expérimental comparant les performances de freinage d'un exemple de pièce de friction selon l'invention avec celles d'une pièce de friction hors invention.

### Description des modes de réalisation

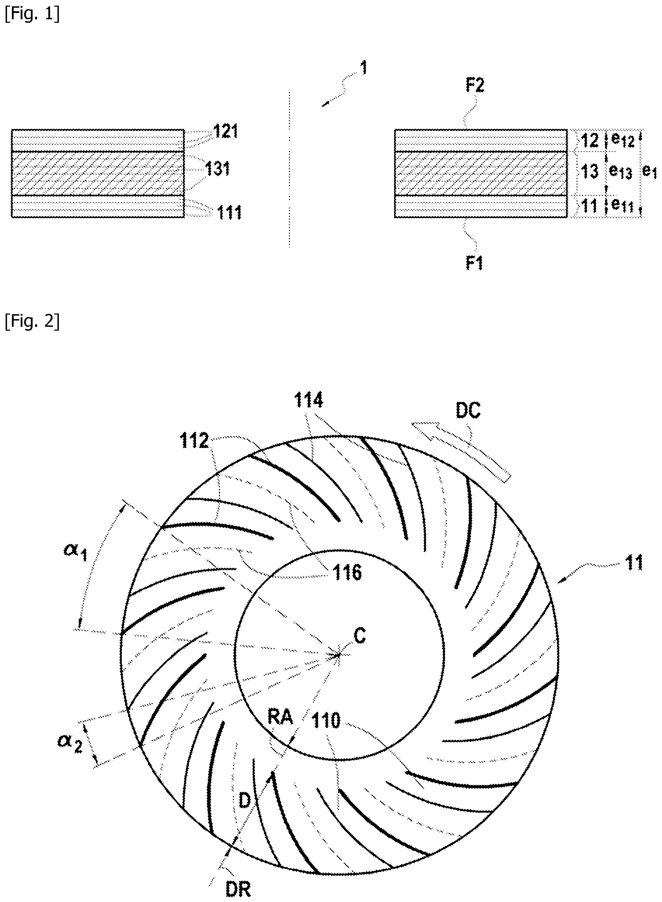

La figure 1 illustre un exemple de préforme fibreuse 1 selon l'invention laquelle est destinée à former le renfort fibreux d'une pièce de friction. La pièce de friction envisagée est ici un disque de frein, notamment un disque de frein en matériau composite carbone/carbone pour des freins de véhicule, et notamment pour une automobile de compétition. Toutefois, l'invention demeure applicable pour d'autres pièces de friction comme des disques de frein pour aéronef.

La préforme fibreuse 1 est obtenue par aiguilletage d'une nappe fibreuse hélicoïdale tissée. La nappe fibreuse hélicoïdale tissée peut être obtenue par tissage tridimensionnel ou bidimensionnel de fils. La préforme fibreuse 1 peut être formée de fils en fibres de carbone. La préforme fibreuse 1 comprend plusieurs couches fibreuses 111, 131 et 121 superposées et aiguilletées entre elles. Les couches fibreuses 111, 131 et 121 définissent initialement une même nappe fibreuse hélicoïdale qui a subi un aiguilletage pour former la préforme fibreuse 1. L'aiguilletage est une méthode de liage mécanique connue en soi dans laquelle une structure fibreuse est traversée avec des aiguilles à barbes auxquelles les fibres s'accrochent. Cela aboutit à un transfert de fibres d'une couche fibreuse à une autre dans une direction transverse à ces couches fibreuses, créant ainsi des liaisons mécaniques entre les couches fibreuses 111, 131 et 121. La préforme fibreuse 1 peut avoir une forme annulaire, comme illustré. La figure 1 représente une section prise le long de l'épaisseur de la préforme fibreuse 1.

Comme indiqué plus haut, la préforme fibreuse 1 comprend des particules céramiques, lesquelles sont uniquement présentes du côté des zones destinées à définir les faces frottantes F1 et F2 de la pièce de friction. En d'autres termes, les particules céramiques sont localisées sélectivement du côté des zones destinées à définir les faces frottantes F1 et F2 de la pièce de friction et ne sont pas présentes dans la partie centrale de la préforme fibreuse. La préforme fibreuse 1 ne présente pas une répartition homogène des particules céramiques le long de son épaisseur. La préforme fibreuse 1 comprend ainsi une première portion 11 et une deuxième portion 12, opposée à la première portion 11, qui sont chacune destinées à définir une face frottante distincte F1 ou F2 de la pièce de friction et qui comprennent chacune des particules céramiques. Les première 11 et deuxième 12 portions sont des portions superficielles de la préforme fibreuse 1. La première portion 11 peut être située dans la partie inférieure de la préforme fibreuse 1 et la deuxième portion 12 dans la partie supérieure de la préforme fibreuse 1. Les particules céramiques contenues dans la première portion 11 peuvent être identiques ou différentes de celles contenues dans la deuxième portion 12.

Dans l'exemple illustré, la première portion 11 et la deuxième portion 12 comprennent chacune une pluralité de couches fibreuses superposées 111 ou 121, chacune de ces couches comprenant des particules céramiques. Les particules céramiques peuvent comprendre des particules de carbure de silicium (SiC) ou de zircone (ZrO₂). La taille moyenne D50 des particules céramiques peut être comprise entre 1 µm et 100 µm par exemple entre 1 µm et 20 µm.

La préforme fibreuse 1 comprend en outre une portion intermédiaire 13 qui est présente entre les première 11 et deuxième 12 portions. La portion intermédiaire 13 s'étend de la première portion 11 à la deuxième portion 12. La première portion 11, la portion intermédiaire 13 et la deuxième portion 12 peuvent être décalées le long de l'épaisseur de la préforme fibreuse 1. La portion intermédiaire 13 peut définir la partie centrale de l'épaisseur de la préforme fibreuse 1. Dans l'exemple illustré, la portion intermédiaire 13 comprend une pluralité de couches fibreuses superposées. La portion intermédiaire 13 est dépourvue de particules céramiques. L'épaisseur e₁₃ de la portion intermédiaire 13 peut être supérieure à l'épaisseur de chacune des première 11 et deuxième 12 portions (e₁₁ et e₁₂), comme illustré. L'épaisseur e₁₁ ou e₁₂ de chacune des première 11 et deuxième 12 portions peut être comprise entre 3% et 30%, par exemple entre 15% et 20%, de l'épaisseur totale e₁ de la préforme fibreuse 1. L'épaisseur e₁₃ de la portion intermédiaire 13 peut être comprise entre 40% et 94%, par exemple entre 60% et 70%, de l'épaisseur totale e₁ de la préforme fibreuse 1. Typiquement, l'épaisseur e₁ peut être comprise entre 5 mm et 40 mm. Chacune des épaisseurs e₁₁ et e₁₂ peut être comprise entre 1 mm et 10 mm, par exemple entre 1 mm et 8 mm. L'épaisseur e₁₃ peut être comprise entre 3 mm et 30 mm.

La teneur massique en particules céramiques dans la préforme fibreuse 1 peut être comprise entre 0,5% et 20% par exemple entre 1% et 5%.

On a représenté à la figure 2 une répartition discontinue des particules céramiques sur la surface des couches fibreuses de la première portion 11. Ce qui va être décrit est applicable aux couches fibreuses de la première portion 11 comme aux couches fibreuses de la deuxième portion 12. A la figure 2, les zones comprenant les particules céramiques d'une première couche fibreuse sont notées 112, celles d'une deuxième couche fibreuse superposée à la première couche fibreuse sont notées 114 et celles d'une troisième couche fibreuse superposée aux première et deuxième couches fibreuses sont notées 116.

Chaque couche fibreuse présente sur sa surface une alternance entre des zones 112-116 comprenant des particules céramiques et des zones 110 dépourvues de particules céramiques. En d'autres termes, on passe successivement sur la surface de chaque couche fibreuse d'une zone 110 dépourvue de particules céramiques à une zone 112-116 comprenant des particules céramiques, puis à nouveau à une zone 110 dépourvue de particules céramiques et ainsi de suite. Dans chaque couche fibreuse, les zones 112-116 comprenant des particules céramiques peuvent être décalées le long d'une direction circonférentielle DC de la couche fibreuse. Dans chaque couche fibreuse, l'écart angulaire α₁ entre deux zones consécutives 112-116 comprenant des particules céramiques mesuré le long de la direction circonférentielle DC peut être compris entre 5° et 60° par exemple entre 15° et 30°. Dans chaque couche fibreuse, les zones 112-116 comprenant des particules céramiques peuvent se correspondre par une rotation autour du centre C de la couche fibreuse. Les zones 112-116 comprenant des particules céramiques peuvent être régulièrement réparties sur la surface de chaque couche fibreuse, comme illustré. On ne sort toutefois pas du cadre de l'invention lorsque cette répartition n'est pas régulière. Dans chaque couche fibreuse, les zones 112-116 comprenant des particules céramiques s'étendent sur une distance D, mesurée le long d'une direction radiale DR de la couche fibreuse, supérieure ou égale à 50% du rayon RA de la couche fibreuse. La direction radiale DR de la couche fibreuse relie la périphérie externe de ladite couche à son centre C. Le rayon RA de la couche fibreuse correspond à la différence entre le grand rayon de la couche fibreuse et son petit rayon. Dans une variante non illustrée, les particules céramiques sont réparties de manière homogène sur la surface des couches fibreuses.

En outre, la figure 2 illustre que les zones comprenant les particules céramiques sont décalées lorsque l'on passe d'une première couche fibreuse à une deuxième couche fibreuse superposée à la première couche fibreuse. Les zones 112-116 comprenant des particules céramiques ne se recouvrent pas entre deux couches fibreuses superposées. L'écart angulaire α₂ entre les zones 112-116 comprenant des particules céramiques de deux couches fibreuses superposées, mesuré le long de la direction circonférentielle DC, peut être compris entre 5° et 20°, par exemple entre 10° et 15°. Dans une variante non illustrée, il y a recouvrement des zones comprenant des particules céramiques entre différentes couches fibreuses superposées.

On vient de décrire la structure d'un exemple de préforme fibreuse 1 selon l'invention. On va maintenant décrire le procédé de fabrication de cette préforme fibreuse 1.

L'aiguilletage d'une nappe fibreuse hélicoïdale tissée est connu en soi et les machines permettant de réaliser cet aiguilletage ne nécessitent pas d'être davantage détaillé ici.

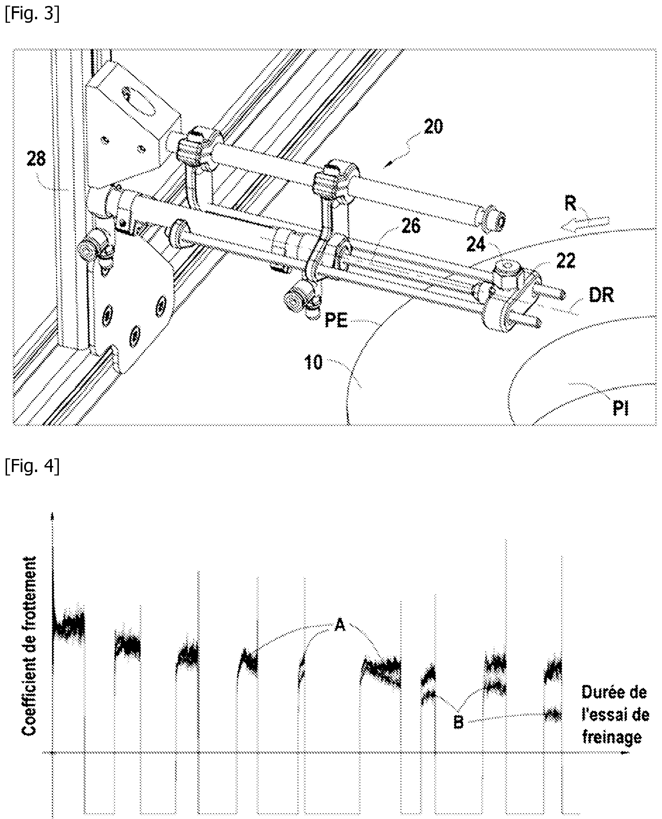

Afin d'obtenir la préforme fibreuse 1 décrite plus haut, il y a distribution, durant l'aiguilletage de la nappe hélicoïdale, des particules céramiques d'une manière contrôlée de sorte à obtenir la répartition souhaitée pour les particules céramiques. La figure 3 illustre ainsi un système de distribution 20 permettant une telle distribution.

Une couche fibreuse 10 de la nappe fibreuse hélicoïdale est présente sur une table d'aiguilletage animée d'un mouvement de rotation matérialisé par la flèche R. La couche fibreuse 10 appartient à la première partie de la nappe fibreuse hélicoïdale tissée qui est destinée à former la première portion 11. La couche fibreuse 10 est aiguilletée par une tête d'aiguilletage (non représentée) comprenant une pluralité d'aiguilles à barbes. Pendant l'aiguilletage de la couche fibreuse 10, le système de distribution 20 distribue des particules céramiques sur la couche fibreuse 10. Dans l'exemple illustré, le système de distribution 20 comprend un réservoir (non représenté) contenant un milieu liquide comprenant les particules céramiques à distribuer en suspension. La teneur massique en particules céramiques dans le milieu liquide peut être comprise entre 5% et 30%, par exemple être d'environ 10%. Ce réservoir est en communication avec une buse de distribution 22 par l'intermédiaire de l'orifice d'alimentation 24.

La buse 22 est mobile en translation par rapport à un bâti fixe 28 portant le système de distribution 20. Dans l'exemple illustré, un vérin 26 met en mouvement la buse de pulvérisation 22. La buse de pulvérisation 22 est animée d'un mouvement le long de la direction radiale DR à la couche fibreuse 10. Lors de l'aiguilletage de la couche fibreuse 10, la buse de pulvérisation 22 effectue plusieurs allers-retours le long de la direction radiale DR alors que la couche fibreuse 10 est animée d'un mouvement de rotation R autour de son centre. La buse de pulvérisation 22 peut être mobile entre une première position située du côté de la périphérie externe PE de la couche fibreuse 10 et une deuxième position située du côté de la périphérie interne PI de la couche fibreuse 10. Durant la rotation de la couche fibreuse 10, la buse de pulvérisation 22 peut distribuer les particules céramiques lors de son déplacement entre la première position et la deuxième position. La buse de pulvérisation peut ensuite revenir de la deuxième position à la première position sans distribuer de particules. Après rotation de la couche fibreuse 10 d'un angle prédéterminé pour obtenir l'écart angulaire α₁ souhaité (voir figure 2), la distribution des particules céramiques sur la couche fibreuse 10 est reprise de la même manière : distribution entre la première position et la deuxième position puis retour de la deuxième position vers la première position sans distribuer de particules. Le traitement est poursuivi de la sorte pour chacune des couches fibreuses superposées qui doivent comporter des particules céramiques avec un décalage dans les positions des particules céramiques des différentes couches superposées si cela est souhaité. Cela permet d'obtenir la distribution des particules céramiques illustrée à la figure 2. Une fois l'aiguilletage des couches de la première partie de la nappe terminé, la distribution des particules céramiques est interrompue et l'on procède à l'aiguilletage des couches de la partie intermédiaire de la nappe sans distribuer les particules céramiques. Une fois cet aiguilletage terminé, on reprend la distribution des particules céramiques durant l'aiguilletage de la deuxième partie de la nappe hélicoïdale. La distribution des particules céramiques dans la deuxième partie de la nappe est effectuée de manière similaire à ce qui a été décrit plus haut pour la première partie de la nappe.

Le système de distribution 20 est contrôlé par une unité de commande qui détermine la fréquence des allers-retours ainsi que la vitesse de déplacement du système de distribution 20 en fonction des autres paramètres du procédé de sorte à obtenir la distribution souhaitée des particules céramiques. Selon une variante, le vérin peut être remplacé par un moteur pas à pas, ce qui permet de faire varier la vitesse d'avancée de la buse de pulvérisation 22 et améliore la précision de déplacement de la buse 22.

On a décrit le cas où les particules céramiques sont déposées sur la couche fibreuse par projection d'une suspension de ces particules dans un milieu liquide mais on pourrait en variante projeter les particules céramiques à sec sans milieu liquide.

A titre d'exemple, une préforme de disque de frein de 60 mm d'épaisseur a été réalisée qui comprenait 40 couches de fibres de carbone tissées. De chaque côté du disque, 8 couches ont été recouvertes de particules céramiques (soit sur 40% de l'épaisseur de la préforme). Chaque couche avait une épaisseur d'environ 1,5mm, correspondant à une épaisseur totale d'environ 12 mm comprenant les particules céramiques de chaque côté du disque. L'application des particules céramiques n'a pas lieu sur la totalité de la surface des couches mais en respectant une alternance entre des zones uniquement constituées de fibres de carbone et des zones comprenant un mélange de fibres de carbone et de particules céramiques, comme illustré à la figure 2. L'application des particules céramiques a été réalisée avec un déphasage de 30° au sein d'une même couche et un déphasage de 10° d'une couche à l'autre.

La pièce de friction peut ensuite être obtenue en densifiant la porosité de la préforme par une matrice. L'étape de densification constitue une étape connue en soi. La matrice peut comporter une phase de matrice de pyrocarbone, obtenue par infiltration chimique en phase vapeur (« Chemical Vapor Infiltration » ; « CVI ») ou par technique d'imprégnation et de pyrolyse de polymère (« Polymer Imprégnation and Pyrolysis » ; « PIP »).

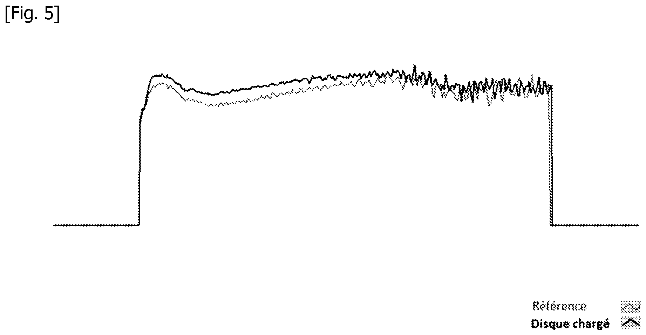

La figure 4 illustre la stabilisation du coefficient de frottement à froid dans le cas d'un disque comprenant un renfort fibreux formé par une préforme telle que décrite plus haut. Le disque a été soumis à un cycle d'essai comprenant une pluralité de freinages successifs à froid simulant les sollicitations du disque lors de la mise en fonctionnement du frein (à froid, 1^{er} tour de piste) pour une application automobile de compétition (courbe « A »). Les performances du disque selon l'invention ont été comparées avec celles obtenues pour un disque hors invention ne comprenant pas de particules céramiques (courbe « B »). On voit qu'au fur et à mesure des freinages qui correspondent à un fonctionnement à froid, le coefficient de frottement obtenu pour le disque selon l'invention est plus stable que celui obtenu pour le disque de référence. La figure 5 illustre quant à elle la similarité des coefficients de frottement à haute énergie entre le disque selon l'invention (« disque chargé ») et le disque de référence (« référence »).

L'expression « compris(e) entre ... et ... » doit se comprendre comme incluant les bornes.

## Revendications

1. Préforme fibreuse (1) destinée à former le renfort fibreux d'une pièce de friction en matériau composite, comprenant une texture fibreuse hélicoïdale tissée définissant une superposition de couches fibreuses (111 ; 121 ; 131), ladite texture étant aiguilletée et définissant :
- une première portion (11) et une deuxième portion (12) chacune destinée à définir une face frottante (F1 ; F2) distincte de la pièce de friction et comprenant chacune au moins une couche fibreuse (111 ; 121) comprenant des particules céramiques, les particules céramiques étant présentes de manière discontinue sur la surface des couches fibreuses des première et deuxième portions avec une alternance entre des zones comprenant les particules céramiques et des zones dépourvues de particules céramiques au niveau des faces frottantes, et
- une portion intermédiaire (13) présente entre la première portion et la deuxième portion et comprenant au moins une couche fibreuse (131), ladite portion intermédiaire étant dépourvue de particules céramiques.

2. Préforme fibreuse (1) selon la revendication 1, dans laquelle les première (11) et deuxième (12) portions comprennent chacune une première couche fibreuse ayant des premières zones (112) dans lesquelles les particules céramiques sont présentes, et une deuxième couche fibreuse, superposée à la première couche fibreuse, ayant des deuxièmes zones (114) dans lesquelles les particules céramiques sont présentes, les deuxièmes zones ne recouvrant pas les premières zones.

3. Préforme fibreuse selon la revendication 1 ou 2, dans laquelle les particules céramiques sont présentes dans des zones (112 ; 114 ; 116) s'étendant le long d'une direction radiale (DR) des couches fibreuses des première (11) et deuxième (12) portions.

4. Pièce de friction en matériau composite comprenant une préforme fibreuse (1) selon l'une quelconque des revendications 1 à 3, et une matrice présente dans la porosité de la préforme fibreuse.

5. Pièce de friction selon la revendication 4, dans laquelle la pièce de friction est un disque de frein.

6. Procédé de fabrication d'une préforme fibreuse (1) selon l'une quelconque des revendications 1 à 3, comprenant au moins :
- l'aiguilletage d'une première partie d'une nappe fibreuse hélicoïdale tissée destinée à former la première portion (11) de la texture fibreuse, des particules céramiques étant distribuées sur ladite première partie durant cet aiguilletage,
- l'aiguilletage d'une partie intermédiaire de la nappe fibreuse hélicoïdale tissée destinée à former la portion intermédiaire (13) de la texture fibreuse, ladite partie intermédiaire étant superposée à la première partie et la distribution des particules céramiques étant interrompue durant cet aiguilletage, et
- l'aiguilletage d'une deuxième partie de la nappe fibreuse hélicoïdale tissée destinée à former la deuxième portion (12) de la texture fibreuse, ladite deuxième partie étant superposée à la partie intermédiaire et des particules céramiques étant distribuées sur ladite deuxième partie durant cet aiguilletage,
les particules céramiques étant distribuées de manière discontinue sur la surface des couches fibreuses des première et deuxième parties de la nappe fibreuse hélicoïdale tissée avec une alternance entre des zones comprenant les particules céramiques et des zones dépourvues de particules céramiques au niveau des faces frottantes.

7. Procédé selon la revendication 6, dans lequel on réalise durant l'aiguilletage de chacune des première et deuxième parties de la nappe fibreuse hélicoïdale tissée :
- l'aiguilletage d'une première couche fibreuse durant lequel on dépose les particules céramiques de manière discontinue dans des premières zones (112) sur la surface de la première couche fibreuse, et
- l'aiguilletage d'une deuxième couche fibreuse, superposée à la première couche fibreuse, durant lequel on dépose les particules céramiques de manière discontinue dans des deuxièmes zones (114) sur la surface de la deuxième couche fibreuse, les deuxièmes zones ne recouvrant pas les premières zones.

8. Procédé selon la revendication 6 ou 7, dans lequel les particules céramiques sont distribuées par un système de distribution (20) en mouvement le long d'une direction radiale (DR) des couches fibreuses des première et deuxième parties.

## Patentansprüche

1. Faservorform (1), die dazu vorgesehen ist, die Faserverstärkung eines Reibungsteils aus einem Verbundmaterial zu bilden, umfassend eine gewobene spiralförmige Fasertextur, die eine Überlagerung von Faserschichten (111; 121; 131) definiert, wobei die Textur vernadelt ist und definiert:
- einen ersten Abschnitt (11) und einen zweiten Abschnitt (12), die jeweils dazu vorgesehen sind, eine separate Reibfläche (F1; F2) des Reibungsteils zu definieren, und jeweils mindestens eine Faserschicht (111; 121) umfassen, die Keramikpartikel umfasst, wobei die Keramikpartikel diskontinuierlich auf der Oberfläche von Faserschichten des ersten und des zweiten Abschnitts mit einer Alternation zwischen Zonen, die Keramikpartikel umfassen, und Zonen, denen es an Keramikpartikeln fehlt, auf Höhe von Reibflächen vorliegen, und
- einen Zwischenabschnitt (13), der zwischen dem ersten Abschnitt und dem zweiten Abschnitt vorliegt und mindestens eine Faserschicht (131) umfasst, wobei es dem Zwischenabschnitt an Keramikpartikeln fehlt.

2. Faservorform (1) nach Anspruch 1, wobei der erste (11) und der zweite (12) Abschnitt jeweils eine erste Faserschicht mit ersten Zonen (112), in denen die Keramikpartikel vorliegen, und eine zweite Faserschicht, die der ersten Faserschicht überlagert ist, mit zweiten Zonen (114), in denen die Keramikpartikel vorliegen, umfassen, wobei die zweiten Zonen die ersten Zonen nicht bedecken.

3. Faservorform nach Anspruch 1 oder 2, wobei die Keramikpartikel in Zonen (112; 114; 116) vorliegen, die sich entlang einer radialen Richtung (DR) von Faserschichten des ersten (11) und des zweiten (12) Abschnitts erstrecken.

4. Reibungsteil aus einem Verbundmaterial, umfassend eine Faservorform (1) nach einem der Ansprüche 1 bis 3 und eine Matrix, die in der Porosität der Faservorform vorliegt.

5. Reibungsteil nach Anspruch 4, wobei das Reibungsteil eine Bremsscheibe ist.

6. Verfahren zur Herstellung einer Faservorform (1) nach einem der Ansprüche 1 bis 3, umfassend mindestens:
- das Vernadeln eines ersten Teils einer gewobenen spiralförmigen Faserbahn, der dazu vorgesehen ist, den ersten Abschnitt (11) der Fasertextur zu bilden, wobei Keramikpartikel während dieses Vernadelns auf dem ersten Teil verteilt werden,
- das Vernadeln eines Zwischenteils der gewobenen spiralförmigen Faserbahn, der dazu vorgesehen ist, den Zwischenabschnitt (13) der Fasertextur zu bilden, wobei der Zwischenteil dem ersten Teil überlagert ist und die Verteilung von Keramikpartikeln während dieses Vernadelns unterbrochen wird, und
- das Vernadeln eines zweiten Teils der gewobenen spiralförmigen Faserbahn, der dazu vorgesehen ist, den zweiten Abschnitt (12) der Fasertextur zu bilden, wobei der zweite Teil dem Zwischenteil überlagert ist und Keramikpartikel während dieses Vernadelns auf dem zweiten Teil verteilt werden,
wobei die Keramikpartikel diskontinuierlich auf der Oberfläche von Faserschichten des ersten und des zweiten Teils der gewobenen spiralförmigen Faserbahn mit einer Alternation zwischen Zonen, die die Keramikpartikel umfassen, und Zonen, denen es an Keramikpartikeln fehlt, auf Höhe von Reibflächen verteilt werden.

7. Verfahren nach Anspruch 6, wobei während des Vernadelns jedes des ersten und des zweiten Teils der gewobenen spiralförmigen Faserbahn durchgeführt wird:
- das Vernadeln einer ersten Faserschicht, während dessen die Keramikpartikel diskontinuierlich in ersten Zonen (112) auf der Oberfläche der ersten Faserschicht abgeschieden werden, und
- das Vernadeln einer zweiten Faserschicht, die der ersten Faserschicht überlagert ist, während dessen die Keramikpartikel diskontinuierlich in zweiten Zonen (114) auf der Oberfläche der zweiten Faserschicht abgeschieden werden, wobei die zweiten Zonen die ersten Zonen nicht bedecken.

8. Verfahren nach Anspruch 6 oder 7, wobei die Keramikpartikel durch ein Verteilungssystem (20) verteilt werden, das sich entlang einer radialen Richtung (DR) von Faserschichten des ersten und des zweiten Teils beweg.

## Claims

1. A fibrous preform (1) for forming the fibrous reinforcement of a friction part made of composite material, comprising a woven helical fibrous texture defining a superposition of fibrous layers (111; 121; 131), said texture being needled and defining:
- a first portion (11) and a second portion (12) each intended to define a distinct rubbing face (F1; F2) of the friction part and each comprising at least one fibrous layer (111; 121) comprising ceramic particles, the ceramic particles are discontinuously present on the surface of the fibrous layers of the first and second portions with an alternation between areas comprising the ceramic particles and areas devoid of ceramic particles at the rubbing faces, and
- an intermediate portion (13) between the first portion and the second portion and comprising at least one fibrous layer (131), said intermediate portion being devoid of ceramic particles.

2. The fibrous preform (1) according to claim 1, wherein the first (11) and second (12) portions each comprise a first fibrous layer having first areas (112) in which the ceramic particles are present, and a second fibrous layer, superimposed on the first fibrous layer, having second areas (114) in which the ceramic particles are present, the second areas not covering the first areas.

3. The fibrous preform according to claim 1 or 2, wherein the ceramic particles are present in areas (112; 114; 116) extending along a radial direction (DR) of the fibrous layers of the first (11) and second (12) portions.

4. The friction part made of composite material comprising a fibrous preform (1) according to any one of claims 1 to 3, and a matrix present in the porosity of the fibrous preform.

5. The friction part according to claim 4, wherein the friction part is a brake disc.

6. A manufacturing method of a fibrous preform (1) according to any one of claims 1 to 3, comprising at least:
- needling a first part of a woven helical fibrous web to form the first portion (11) of the fibrous texture, wherein ceramic particles are distributed on said first part during said needling,
- needling an intermediate part of the woven helical fibrous web to form the intermediate portion (13) of the fibrous texture, said intermediate part being superimposed on the first part and the distribution of the ceramic particles being interrupted during said needling, and
- needling a second part (12) of the woven helical fibrous web to form the second portion of the fibrous texture, said second part being superimposed on the intermediate part and ceramic particles being distributed on said second part during said needling,
the ceramic particles being discontinuously distributed on the surface of the fibrous layers of the first and second portions of the woven helical fibrous web with an alternation between areas comprising the ceramic particles and areas devoid of ceramic particles at the rubbing faces.

7. The method according to claim 6, wherein when needling each of the first and second portions of the woven helical fibrous web, the following is carried out:
- needling a first fibrous layer during which ceramic particles are discontinuously deposited in first areas (112) on the surface of the first fibrous layer, and
- needling a second fibrous layer, superimposed on the first fibrous layer, during which the ceramic particles are discontinuously deposited in second areas (114) on the surface of the second fibrous layer, the second areas not covering the first areas.

8. The method according to claim 6 or 7, wherein the ceramic particles are distributed by a distribution system (20) moving along a radial direction (DR) of the fibrous layers of the first and second portions.
